# EUROPÄISCHE PATENTANMELDUNG

(11) **EP 3 677 108 A1**
(43) Veröffentlichungstag der Anmeldung: **08.07.2020**
(21) Anmeldenummer: 19215532.3
(22) Anmeldetag: 12.12.2019
(51) Int. Cl.: A01D 34/14, A01D 34/73, A01D 34/835, B23D 61/02

(54) **SCHNEIDMESSER**

(30) Priorität: 24.12.2018 DE 202018107424 U
(71) Anmelder: Wallner, Klaus, 94439 Rossbach-Münchsdorf Bayern (DE)
(72) Erfinder: Wallner, Klaus, 94439 Rossbach-Münchsdorf Bayern (DE)
(74) Vertreter: Lichtnecker, Markus Christoph

(57) **Zusammenfassung**

Die Erfindung betrifft ein Schneidmesser für eine Messerwalze (20) zum Abschneiden, Zerkleinern, Einarbeiten und/oder Zerfasern von Pflanzenresten, aufweisend einen sich längs erstreckenden oder kreisförmigen Messerkörper (10), mehrere nebeneinander angeordnete Zacken (12), und wenigstens eine Befestigungsvorrichtung (17) zur Befestigung an einer Messerwalze (20).

## Beschreibung

Die Erfindung betrifft ein Schneidmesser für eine Messerwalze zum Abschneiden, Zerkleinern, Einarbeiten und/oder Zerfasern von Pflanzenresten, aufweisend einen sich längs erstreckenden Messerkörper.

Nach der Ernte verbleiben auf dem Feld Ernterückstände wie z.B. Raps- oder Maisstoppeln, Zwischenfrüchte oder Mulchsaaten.

Herkömmlich werden zum Zerkleinern der Ernterückstände Mulcher eingesetzt. Diese Mulcher werden dabei über die Zapfwelle oder die Hydraulik eines Fahrzeugs, z.B. Traktors, angetrieben. Man unterscheidet so genannte Sichelmulcher und Schlegelmulcher. Bei einem Sichelmulcher sind waagrecht orientierte Schneidmesser vorgesehen, welche durch schnelle Rotation Ernterückstände abschneiden. Bei einem Schlegelmulcher kommt hingegen eine sich entgegen der Fahrtrichtung rotierende Walze zum Einsatz, welche Ernterückstände zerkleinert.

Die Schneidmesser weisen dabei eine durchgehende, gerade Klinge auf, was dazu führen kann, dass bei bestimmten Fahrgeschwindigkeiten und/oder bei feuchten Böden bzw. Pflanzenresten keine optimalen Ergebnisse erzielt werden.

Es ist daher eine Aufgabe der Erfindung, ein Schneidmesser dahingehend zu verbessern, dass Pflanzenreste bestmöglich abgeschnitten, zerkleinert und/oder zerfasert werden.

Die Lösung dieser Aufgabe erfolgt durch die Vorrichtungen mit den Merkmalen der unabhängigen Ansprüche.

Erfindungsgemäß wird das Schneidmesser bei einer Messerwalze zum Abschneiden, Zerkleinern, Einarbeiten und/oder Zerfasern von Pflanzenresten, z.B. Ernterückstände, eingesetzt.

Bei den Ernterückständen kann es sich z.B. um Raps- oder Maisstoppeln, Sonnenblumen, Senf oder andere Zwischenfrüchte und/oder Mulchsaaten, handeln.

Beispielsweise können abgefrorene Begrünungsreste zerkleinert, z.B. zerschnitten, Zwischenfruchtreste, z.B. Raps- oder Maisstoppeln, eingearbeitet und/oder Maisstängel zerfasert werden.

Das Schneidmesser schneidet vorzugsweise zumindest hauptsächlich die Pflanzenreste. Anders als z.B. bei einer Krümelwalze wird somit der Pflanzenrest bearbeitet, während das Erdreich nicht bzw. nur minimal bearbeitet wird.

Das Schneidmesser weist einen Messerkörper und mehrere nebeneinander angeordnete Zacken auf. Der Messerkörper kann sich längs erstrecken oder aber kreisförmig ausgebildet sein.

Der Messerkörper und/oder die Zacken können insbesondere ein Metallmaterial, z.B. Stahl, beispielsweise verschleißfester Stahl, umfassen oder daraus bestehen.

Der Begriff Zacken ist breit zu verstehen und umfasst z.B. auch Zähne. Das Schneidmesser ist somit gezackt bzw. gezahnt.

Die Zacken können z.B. im Wesentlichen dreieckförmig, v-förmig und/oder u-förmig ausgebildet sein. Vorzugsweise können die Schenkel gebogen sein. Die Länge eines Zackens kann z.B. zwischen 0,5 cm und 10 cm, insbesondere zwischen 1 cm und 7 cm, vorzugsweise 2 cm, 3 cm, 4 cm oder 5 cm, betragen.

Insbesondere können sämtliche Zacken des Schneidmessers baugleich geformt sein, wobei grundsätzlich auch unterschiedliche Zacken denkbar sind.

Die Zacken sind vorzugsweise einstückig mit dem Messerkörper ausgeformt. So können die Zacken, insbesondere werkseitig, z.B. durch ein schneidendes und/oder zerspanendes Verfahren, z.B. Schneiden, Drehen, Bohren, Fräsen und/oder Schleifen, aus dem Messerkörper geschaffen werden. Auch können die Zacken aus dem Messerkörper gewalzt, ausgestanzt, ausgestrahlt oder ausgelasert sein.

Das Schneidmesser gestaltet sich dadurch äußerst stabil.

Alternativ können die Zacken auch nachträglich mit dem Messerkörper lösbar oder unlösbar verbunden, beispielsweise verschweißt und/oder verschraubt, werden.

Im Gegensatz zu einer glatten Schneide wird die Schneideigenschaft beim Schneiden von Pflanzenresten deutlich verbessert, vergleichbar mit einem Brotmesser.

Die Pflanzenreste werden durch das gezackte Schneidmesser bestmöglich abgeschnitten, zerkleinert und/oder zerfasert.

Das Schneidmesser weist wenigstens eine Befestigungsvorrichtung zur Befestigung an einer Messerwalze auf. Vorzugsweise ist das Schneidmesser lösbar an der Messerwalze befestigbar. So kann z.B. ein Austausch des Schneidmessers, beispielsweise bei einem Verschleiß, ermöglicht werden. Alternativ kann das Schneidmesser auch fest mit der Messerwalze verbunden sein.

Weiterbildungen der Erfindung sind auch den abhängigen Ansprüchen, der Beschreibung sowie den beigefügten Zeichnungen zu entnehmen.

Gemäß einer Ausführungsform ist der Messerkörper plattenartig ausgebildet. Durch die flache Form wird insbesondere ein gutes Schneidergebnis erreicht.

Nach einer weiteren Ausführungsform ist der sich längs erstreckende Messerkörper rechteckförmig ausgebildet. Dadurch wird insbesondere ein gleichmäßiges Schneiden ermöglicht.

An einer Stirnseite oder an beiden Stirnseiten kann der Messerkörper beispielsweise eine Zunge aufweisen, welche schmäler ist als die Breite des restlichen Messerkörpers. An der Zunge kann insbesondere eine Befestigungsvorrichtung vorgesehen sein. Die Zunge kann beispielsweise zur Befestigung an bestimmten Stellen der Messerwalze dienen bzw. erforderlich sein.

Gemäß einer weiteren Ausführungsform weist der sich längs erstreckende Messerkörper eine Länge zwischen 30 cm und 400 cm, vorzugsweise zwischen 50 cm und 80 cm, bevorzugt von 75 cm, auf.

Eine Messerwalze kann z.B. eine Arbeitsbreite zwischen 0,7 m und 9 m, vorzugsweise zwischen 2,5 m und 8 m, insbesondere von 2,5 m, 3 m, 4 m, 4,5 m, 5 m, 6 m, 7 m, 7,5 m, 8 m oder 9 m, aufweisen. Um die Arbeitsbreite abzudecken, können vorzugsweise mehrere, beispielsweise vier, Schneidmesser nebeneinander angeordnet sein.

Nach einer weiteren Ausführungsform weist der sich längs erstreckende Messerkörper eine Breite zwischen 2 cm und 30 cm, vorzugsweise zwischen 5 cm und 15 cm, bevorzugt von 10 cm, auf.

Gemäß einer weiteren Ausführungsform weist der Messerkörper eine Dicke zwischen 2 mm und 20 mm, vorzugsweise zwischen 4 mm und 8 mm, auf.

Nach einer weiteren Ausführungsform sind mindestens 5, 10, 15, 20, 25, 30, 35, 40, 45 oder 50 Zacken vorgesehen. Es sind somit insbesondere zahlreiche Zacken nebeneinander angeordnet. Vorzugsweise erstrecken sich die Zacken über eine gesamte Länge bzw. den gesamten Umfang des Messerkörpers.

Gemäß einer weiteren Ausführungsform sind zwischen 5 und 50 Zacken, vorzugsweise zwischen 20 und 30 Zacken, vorgesehen.

Nach einer weiteren Ausführungsform sind die Zacken lediglich an einer Längsseite des sich längs erstreckenden Messerkörpers angeordnet. Diese Variante ist vergleichsweise kostengünstig.

Alternativ sind die Zacken an beiden Längsseiten des sich längs erstreckenden Messerkörpers angeordnet. So kann das Schneidmesser insbesondere gewendet werden, beispielsweise wenn eine Seite abgestumpft ist.

Gemäß einer weiteren Ausführungsform weisen die Zacken eine Schneide auf. Beispielsweise können die Zacken unter einem Winkel zwischen 10° und 40°, vorzugsweise zwischen 20° und 30°, geschliffen sein.

Nach einer weiteren Ausführungsform ist ein Wellen- oder Zickzack-Schliff vorgesehen, wobei die Zacken die Vorsprünge des Wellen- oder Zickzack-Schliffs bilden. Die Schneide ist vorzugsweise durchgehend. So können die Zacken insbesondere ineinander übergehen. Auch die Kerben zwischen den Zacken sind vorzugsweise geschliffen. Dadurch werden auch in den Kerben Pflanzenreste geschnitten und bleiben nicht hängen.

Gemäß einer weiteren Ausführungsform weist die Befestigungsvorrichtung wenigstens eine Aussparung auf. Die Befestigungsvorrichtung ist vorzugsweise am Messerkörper ausgebildet. So kann der Messerkörper z.B. eine oder mehrere Aussparungen aufweisen.

Die Aussparung kann, insbesondere werkseitig, z.B. durch ein schneidendes und/oder zerspanendes Verfahren, z.B. Schneiden, Drehen, Bohren, Fräsen und/oder Schleifen, in den Messerkörper eingebracht werden. Auch kann die Aussparung aus dem Messerkörper ausgestanzt, ausgestrahlt oder ausgelasert sein.

Die Aussparung kann rund oder eckig, insbesondere rechteckig, z.B. quadratisch, ausgebildet sein.

Das Schneidmesser kann an der Aussparung insbesondere mit der Messerwalze, z.B. einem Walzenkörper der Messerwalze, verschraubt sein.

Nach einer weiteren Ausführungsform weist die Befestigungsvorrichtung wenigstens zwei oder drei, insbesondere äquidistante, Aussparungen auf. Die Aussparungen können an seitlichen Randbereichen und/oder mittig angeordnet sein. Eine sichere Befestigung an der Messerwalze wird dadurch ermöglicht. Auch wird ein ungewolltes Verdrehen des Schneidmessers verhindert.

Die Erfindung betrifft auch die Verwendung eines erfindungsgemäßen Schneidmessers zum Abschneiden, Zerkleinern, Einarbeiten und/oder Zerfasern von Pflanzenresten.

Ferner betrifft die Erfindung eine Messerwalze mit einem zylindrischen Walzenkörper und wenigstens einem erfindungsgemäßen Schneidmesser.

Gemäß einer Ausführungsform sind mehrere, insbesondere zylindrisch angeordnete, Schneidmesser mit jeweils einem sich längs erstreckenden Messerkörper vorgesehen.

Beispielsweise sind am Messerwalzenumfang, vorzugsweise in gleichmäßigen Abständen, zwischen zwei und zehn, vorzugsweise drei, vier fünf, sechs, sieben, acht oder neun, Schneidlinien mit jeweils wenigstens einem Schneidmesser vorgesehen.

Die Schneidmesser können gemeinsam z.B. einen waagrecht orientierten Schneidzylinder bilden, wobei die Zacken außen angeordnet sind. Insbesondere erstrecken sich die Schneidmesser über die gesamte Länge der Messerwalze.

Die Messerwalze kann sich insbesondere über die gesamte Arbeitsbreite erstrecken, welche zwischen etwa 0,5 m und 18 m liegen kann. Der Durchmesser der Messerwalze kann zwischen etwa 100 mm und 1.500 mm, insbesondere bei 360 mm oder 510 mm, liegen.

Nach einer weiteren Ausführungsform sind die Schneidmesser derart am Walzenkörper angeordnet, dass sich die Zacken in tangentialer Richtung erstrecken.

Alternativ können die Schneidmesser derart am Walzenkörper angeordnet sein, dass sich die Zacken in radialer Richtung erstrecken.

Die Orientierung der Zacken kann abhängig von der Art der Pflanzenreste, der Bodenart, dem Zustand des Bodens und/oder der Witterung entsprechend gewählt werden, um ein bestmögliches Schneidergebnis zu erreichen.

Gemäß einer weiteren Ausführungsform sind die Schneidmesser horizontal orientiert. Die Schneidmesser können auf diese Weise z.B. stehende Stoppeln abschneiden.

Alternativ sind die Schneidmesser gegenüber der Horizontalen um maximal 30°, insbesondere um maximal 20°, geneigt. Die Schneidmesser sind also gewissermaßen strahlförmig angeordnet. Im Gegensatz zu einer rein horizontalen Anordnung passt sich die Messerwalze hierbei besser an den Boden an, so dass Unebenheiten im Boden kompensiert werden und nicht zu Erschütterungen führen.

Gemäß einer weiteren Ausführungsform weisen die Schneidmesser eine Verdrillung auf. Hierbei kann es sich um eine Rechts- oder Linksverdrillung handeln. Die Verdrillung kann z.B. zu einem Versatz von bis zu etwa 20 cm führen. Bei der Verdrillung werden die Schneidmesser insbesondere auch in sich verbogen. Die jeweiligen Zacken befinden sich jedoch nach wie vor an der Außenseite der Messerwalze.

Die Schneidmesser können jeweils gegenüber einer sich zwischen dem äußeren Ende des Schneidmessers und der Drehachse der Messerwalze erstreckenden Geraden z.B. zwischen etwa 2° und 6°, vorzugsweise 4°, geneigt sein.

Nach einer weiteren Ausführungsform sind mehrere Schneidmesser mit jeweils einem kreisförmigen Messerkörper vorgesehen. Die Schneidmesser können insbesondere äquidistant voneinander beabstandet und/oder parallel zueinander orientiert sein.

Gemäß einer weiteren Ausführungsform sind die Schneidmesser vertikal orientiert. So können auch quer liegende Pflanzenreste durchtrennt werden.

Die Erfindung betrifft auch die Verwendung einer erfindungsgemäßen Messerwalze zum Abschneiden, Zerkleinern, Einarbeiten und/oder Zerfasern von Pflanzenresten.

Ferner betrifft die Erfindung eine Bodenbearbeitungsvorrichtung mit wenigstens einer erfindungsgemäßen Messerwalze.

Die Bodenbearbeitungsvorrichtung kann neben der Messerwalze beispielsweise auch andere Geräte umfassen.

Insbesondere kann die Bodenbearbeitungsvorrichtung z.B. an einem Fahrzeug, beispielsweise einer Zugmaschine wie einem Traktor, Unimog oder dergleichen, befestigt werden. Dabei kann die Bodenbearbeitungsvorrichtung z.B. als Anhängegerät hinten am Fahrzeug, als Aufsitzmaschine vorne am Fahrzeug oder aber als Ausleger an einem Arm befestigt werden.

Gemäß einer Ausführungsform sind mehrere, vorzugsweise zwei, Messerwalzen nebeneinander und/oder hintereinander angeordnet.

Insbesondere sind zwei, drei, vier oder mehr Messerwalzen denkbar. Je mehr Messerwalzen vorgesehen sind, desto gründlicher kann die Bearbeitung der Ernterückstände erfolgen.

Die Anzahl der Schneidlinien der Messerwalzen kann insbesondere gleich oder unterschiedlich sein.

Die Messerwalzen können insbesondere gleichläufig oder gegenläufig sein.

Daneben ist auch eine Kombination einer oder mehrerer Messerwalzen mit einer oder mehreren anderen Walzen, z.B. Wellenscheibenwalzen, möglich.

Nach einer weiteren Ausführungsform weisen die Schneidmesser zweier Messerwalzen eine unterschiedliche Verdrillung auf. So kann eine in Fahrtrichtung vorne angeordnete Messerwalze z.B. einen Versatz von 18 cm und eine in Fahrtrichtung hinten angeordnete Messerwalze z.B. einen Versatz von 14 cm aufweisen oder umgekehrt.

Alternativ oder zusätzlich können die Schneidmesser einer Messerwalze eine Rechtsverdrillung und Schneidmesser einer anderen Messerwalze eine Linksverdrillung aufweisen.

Auch können die Messerwalzen versetzt zueinander angeordnet sein.

Die Messerwalzen laufen vorzugsweise nicht in Reihe, d.h. es werden bei einem Durchgang unterschiedliche Bereiche bearbeitet, wodurch ein gutes Schneidergebnis erreicht wird.

Nach einer weiteren Ausführungsform sind wenigstens eine Messerwalze mit Schneidmessern mit jeweils einem sich längs erstreckenden Messerkörper und wenigstens eine Messerwalze mit Schneidmessern mit jeweils einem kreisförmigen Messerkörper vorgesehen.

Dadurch wird insbesondere gleichzeitig ein horizontales und vertikales Schneiden ermöglicht.

Nach einer weiteren Ausführungsform ist die Messerwalze passiv angetrieben. So ist insbesondere kein aktiver Antrieb, z.B. über eine Zapfwelle eines Fahrzeugs, vorgesehen, wobei dies gleichwohl möglich ist. Der Antrieb erfolgt jedoch bevorzugt durch ein Abrollen am Boden. Die Drehgeschwindigkeit der Messerwalze hängt somit unmittelbar von der Fahrgeschwindigkeit ab. Dies führt zu besseren Bearbeitungsergebnissen als beispielsweise bei einem Mulcher, welcher unabhängig von der Fahrgeschwindigkeit des Fahrzeugs stets mit derselben Drehzahl von 540 oder 1.000 Umdrehungen pro Minute betrieben wird.

Die Erfindung betrifft auch die Verwendung einer erfindungsgemäßen Bodenbearbeitungsvorrichtung zum Abschneiden, Zerkleinern, Einarbeiten und/oder Zerfasern von Pflanzenresten.

Alle hier beschriebenen Aspekte, Ausführungsformen und Merkmale der Erfindung können, insbesondere auch losgelöst von der konkreten Ausgestaltung, in deren Zusammenhang sie erwähnt werden, jeweils miteinander kombiniert werden. Insbesondere können alle Gegenstände der abhängigen Ansprüche untereinander und mit jedem Gegenstand der unabhängigen Ansprüche kombiniert werden.

Die Erfindung wird im Folgenden beispielhaft unter Bezugnahme auf die Zeichnungen beschrieben. Es zeigen:
- Fig. 1: eine Draufsicht einer Ausführungsform eines erfindungsgemäßen Schneidmessers,
- Fig. 2: eine Draufsicht einer weiteren Ausführungsform eines erfindungsgemäßen Schneidmessers,
- Fig. 3: eine Vorderansicht einer Ausführungsform einer erfindungsgemäßen Bodenbearbeitungsvorrichtung, und
- Fig. 4: eine Draufsicht einer weiteren Ausführungsform eines erfindungsgemäßen Schneidmessers.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Insbesondere kann die Anzahl der Befestigungsvorrichtungen, der Zacken und/oder der Schneidlinien variieren. Auch kann die Anzahl und Anordnung der Messerwalzen einer Bodenbearbeitungsvorrichtung variieren.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

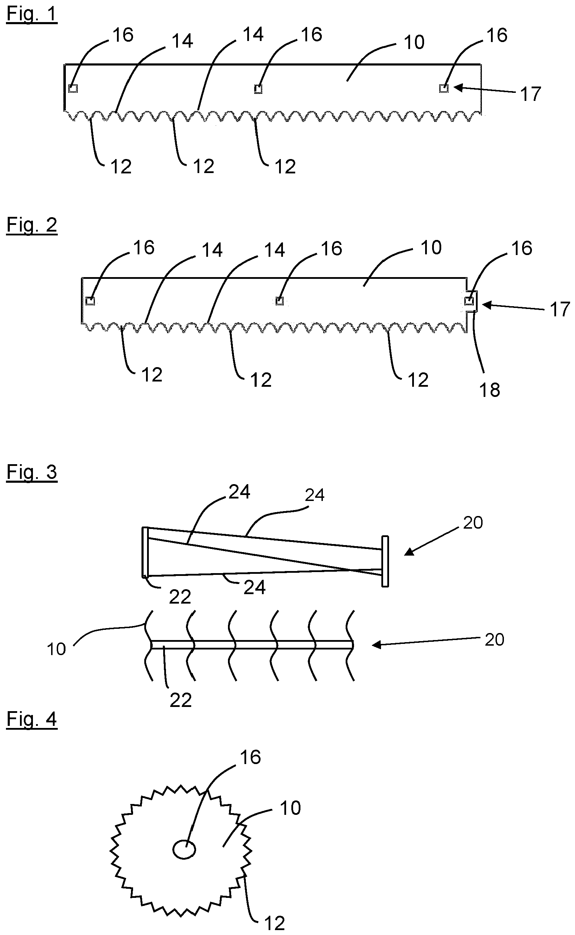

Fig. 1 zeigt ein Schneidmesser mit einem rechteckförmigen Messerkörper 10 und einer Vielzahl an Zacken 12, welche an einer Längsseite des Messerkörpers 10 angeordnet sind.

Die Zacken 12 können als Vorsprünge eines wellenförmigen Schliffs ausgebildet sein. Auch die Kerben 14 zwischen den Zacken 12 können geschliffen sein.

Am Messerkörper 10 sind drei Aussparungen 16 einer Befestigungsvorrichtung 17 vorgesehen. Beispielsweise mittels Schrauben kann das Schneidmesser dadurch an einer Messerwalze 20 befestigt werden.

Bei der Ausführungsform, welche in Fig. 2 gezeigt ist, weist der Messerkörper 10 eine Zunge 18 auf. Diese kann z.B. rechteckig, rund oder halbrund ausgebildet sein. Die Zunge 18 kann zur Befestigung an bestimmten Positionen an der Messerwalze 20 vorteilhaft sein.

In Fig. 3 ist eine Bodenbearbeitungsvorrichtung mit zwei Messerwalzen 20 dargestellt. An einem Walzenkörper 22 können mehrere Schneidmesser befestigt sein.

Beispielsweise kann eine Messerwalze 20 drei Schneidlinien 24 aufweisen. Es können jedoch auch z.B. zwei, vier, fünf, sechs, sieben, acht, neun, zehn oder mehr Schneidlinien 24 vorgesehen sein. An den Schneidlinien 24 kann jeweils ein Schneidmesser mit einem sich längs ersteckenden Messerkörper 10 angeordnet sein. Vorzugsweise sind an jeder Schneidlinie 24 jedoch mehrere Schneidmesser nebeneinander angeordnet.

Die Schneidmesser können insbesondere lösbar befestigt sein, um einen schnellen Austausch, z.B. bei Verschleiß, zu ermöglichen.

Die Schneidlinien 24 können, wie dargestellt, zueinander verdrillt sein. Alternativ können sich diese auch horizontal erstrecken.

Eine weitere Messerwalze 20 kann mehrere, z.B. sechs, vertikal orientierte Schneidmesser mit kreisförmigen Messerkörpern 10 aufweisen.

Durch die unterschiedlichen Messerwalzen 20 werden ein horizontales und ein vertikales Schneiden ermöglicht.

Es können auch mehr als zwei Messerwalzen 20 vorgesehen sein, beispielsweise zwei Messerwalzen 20 mit sich längs erstreckenden Messerkörpern 10 und zwei Messerwalzen 20 mit kreisförmigen Messerkörpern 10.

Die kreisförmigen Messerkörper 10 können z.B. flach oder gewellt sein.

Wie in Fig. 4 dargestellt ist, kann das Schneidmesser einen zumindest kreisförmigen Messerkörper 10 aufweisen. An dem Messerkörper 10 ist eine Vielzahl an Zacken 12 angeordnet. Die Anzahl der Zacken 12 ist grundsätzlich beliebig.

Zentral ist eine Aussparung 16 vorgesehen, an der das Schneidmesser an einer Messerwalze 20 befestigt werden kann.

### Bezugszeichenliste

- 10: Messerkörper
- 12: Zacke
- 14: Kerbe
- 16: Aussparung
- 17: Befestigungsvorrichtung
- 18: Zunge
- 20: Messerwalze
- 22: Walzenkörper
- 24: Schneidlinie

## Patentansprüche

1. Schneidmesser für eine Messerwalze (20) zum Abschneiden, Zerkleinern, Einarbeiten und/oder Zerfasern von Pflanzenresten, aufweisend einen sich längs erstreckenden oder kreisförmigen Messerkörper (10), mehrere nebeneinander angeordnete Zacken (12), und
wenigstens eine Befestigungsvorrichtung (17) zur Befestigung an einer Messerwalze (20).

2. Schneidmesser nach Anspruch 1,
**dadurch gekennzeichnet,**
**dass** der Messerkörper (10) plattenartig ausgebildet ist.

3. Schneidmesser nach einem der vorhergehenden Ansprüche,
**dadurch gekennzeichnet,**
**dass** mindestens 5, 10, 15, 20, 25, 30, 35, 40, 45 oder 50 Zacken (12) vorgesehen sind.

4. Schneidmesser nach einem der vorhergehenden Ansprüche,
**dadurch gekennzeichnet,**
**dass** die Zacken (12) lediglich an einer Längsseite des sich längs erstreckenden Messerkörpers (10) angeordnet sind.

5. Schneidmesser nach einem der Ansprüche 1 bis 3,
**dadurch gekennzeichnet,**
**dass** die Zacken (12) an beiden Längsseiten des sich längs erstreckenden Messerkörpers (10) angeordnet sind.

6. Schneidmesser nach einem der vorhergehenden Ansprüche,
**dadurch gekennzeichnet,**
**dass** ein Wellen- oder Zickzack-Schliff vorgesehen ist, wobei die Zacken (12) die Vorsprünge des Wellen- oder Zickzack-Schliffs bilden.

7. Schneidmesser nach einem der vorhergehenden Ansprüche,
**dadurch gekennzeichnet,**
**dass** die Befestigungsvorrichtung (17) wenigstens eine oder genau eine Aussparung (16) aufweist.

8. Messerwalze (20) mit einem zylindrischen Walzenkörper (22) und wenigstens einem Schneidmesser nach einem der Ansprüche 1 bis 7.

9. Messerwalze (20) nach Anspruch 8,
**dadurch gekennzeichnet,**
**dass** mehrere, insbesondere zylindrisch angeordnete, Schneidmesser mit jeweils einem sich längs erstreckenden Messerkörper (10) vorgesehen sind.

10. Messerwalze (20) nach Anspruch 8 oder 9,
**dadurch gekennzeichnet,**
**dass** die Schneidmesser derart am Walzenkörper (22) angeordnet sind, dass sich die Zacken (12) in tangentialer Richtung erstrecken.

11. Messerwalze (20) nach einem der Ansprüche 8 bis 9,
**dadurch gekennzeichnet,**
**dass** die Schneidmesser derart am Walzenkörper (22) angeordnet sind, dass sich die Zacken (12) in radialer Richtung erstrecken.

12. Messerwalze (20) nach Anspruch 8,
**dadurch gekennzeichnet,**
**dass** mehrere Schneidmesser mit jeweils einem kreisförmigen Messerkörper (10) vorgesehen sind.

13. Messerwalze (20) nach Anspruch 12,
**dadurch gekennzeichnet,**
**dass** die Schneidmesser vertikal orientiert sind.

14. Bodenbearbeitungsvorrichtung mit wenigstens einer Messerwalze (20) nach einem der Ansprüche 8 bis 13.

15. Bodenbearbeitungsvorrichtung nach Anspruch 14,
**dadurch gekennzeichnet,**
**dass** mehrere, vorzugsweise zwei, Messerwalzen (20) nebeneinander und/oder hintereinander angeordnet sind.
